# EUROPEAN PATENT APPLICATION

(11) **EP 4 727 050 A1**
(43) Date of publication of application: **15.04.2026**
(21) Application number: 24206286.7
(22) Date of filing: 11.10.2024
(51) Int. Cl.: H04L 9/00, H04L 9/40

(54) **BLOCKCHAIN WITNESSING METHOD AND SYSTEM**

(71) Applicant: QPQ AG, 6300 Zug (CH)
(72) Inventor: CHEW, Gregory, 6300 Zug (CH); WIGER, Ulf, 6300 Zug (CH); EVERETT, Craig, 6300 Zug (CH); IVANOV, Dimitar, 6300 Zug (CH)
(74) Representative: Murgitroyd & Company

(57) **Abstract**

A system and method of blockchain witnessing wherein a structural key block without transaction data is used to validate the structural integrity of the blockchain via a consensus algorithm without exposing transaction data to selective validation. A preceding generation of the blockchain is sealed once the proofs of validation of the structural key block are added to the blockchain in a subsequently validated structural key block.

## Description

### FIELD OF THE INVENTION

The present disclosure relates to blockchain witnessing method and system. More particularly, but not exclusively, it relates to a blockchain witnessing method and system employing blocks without transaction data for validation.

### BACKGROUND TO THE INVENTION

Blockchains offer the potential of truly decentralized transaction systems, but this introduces some hard new challenges. One such challenge is determining when a given transaction is sufficiently safe from various attacks to be considered 'finalized' on-chain. In the classical approach, for example Bitcoin, practical finality is considered through the estimated cost of 'rewriting' the chain history, as the number of subsequent blocks adds up. On a Proof of Work, POW, blockchain, the cost of introducing a competing branch is quantified using the mining power required to beat the accumulated difficulty of the main branch. On Proof of Stake systems, such attacks do not accumulate costs in the same way, as stake is not typically consumed as a result of winning elections.

Even brute-force logic of POW offers protection only if the total mining power committed to the chain makes attacks expensive enough to be unattractive. Young blockchains still trying to attract miners will be vulnerable to brute-force attacks, as the cost of rewriting the chain tends to be low.

For this reason, different voting schemes have evolved to be able to declare finality through a quorum. Various methods are employed, usually involving a qualification threshold, in which validators, also known as witnesses, are appointed. These witnesses check that a new block conforms to the rules of the chain and, if a sufficient number of witnesses agree, a quorum is achieved and the block is considered final. Once finality is achieved a block cannot be evicted from the chain, no matter how much 'force', work or stake, is applied.

A number of challenges remain, for example, if the blocks being validated also carry content in the form of transactions, it becomes difficult to prevent validators from making validation determinations based upon the content of the blocks, for example blocks that include certain types of transactions. Additionally, if the block producer violates some relevant regulations, e.g. including fraudulent or otherwise offending transactions, it becomes an open question to which extent validators who approved the block are complicit and therefore liable in the approval of an offending transaction.

The original model for blockchains was Bitcoin, where no validation at all took place, apart from verifying the Proof of Work, calculating the accumulated difficulty and performing semantic validation of each block. Also, each block carries transactions.

### SUMMARY OF THE DISCLOSURE

According to a first aspect of the present disclosure there is provided a computer implemented method of blockchain witnessing comprising the steps of:
i) generating a key block without transaction data at a miner node;
ii) transmitting the key block to a plurality of nodes comprising at least some witness nodes;
iii) validating the key block by at least a portion of the witness nodes;
iv) transmitting proofs corresponding to the validation of the key block to one or more miner nodes from the portion of the witness nodes;
v) executing a consensus operation at at least one of the one or more miner nodes based on validation results received from the portion of the witness nodes; and
vi) determining if the key block is valid based upon the outcome of the consensus operation.

The method may further comprise appending the validated key block to the blockchain following a transaction bearing block.

The method may further comprise generating a further key block, without transaction data, and comprising data corresponding to the proofs at a, or the, miner node. The method may comprise witnessing the further key block using steps ii) to vi) of the method. The method may comprise sealing the key block by appending the witnessed further key block to the blockchain. The method may include including the proofs corresponding to the testimonies in the key block included as a seal only if quorum is achieved under the consensus operation.

The method may comprise validating the key block by a portion of the witness nodes.

The witness nodes may be deterministically identified as qualified to witness the key block.

Validating the key block may comprise determining that the key block succeeds a current top block of the blockchain. The top block of the blockchain may be a block corresponding to a block determined be the top block at a, or the, miner node.

The key block may comprise data corresponding to an indication of the node allowed to generate the next transaction block.

According to a second aspect of the present disclosure there is provided a blockchain witnessing system comprising:
a miner node; and
a plurality nodes comprising at least some witness nodes; wherein
   the miner node is arranged:
      to generate a key block without transaction data; and
      transmit the key block to the nodes;
   at least a portion of the witness nodes are arranged to:
      validate the key block; and
      transmit proofs corresponding to the validation of the key block to the miner node; and
      wherein the miner node is further arranged to:
         execute a consensus operation based on validation results received from the at least a portion of the witness nodes; and
determine if the key block is valid based upon the outcome of the consensus operation.

The miner node may be arranged to append the validated key block to the blockchain following a current top block of the blockchain.

The miner node may be further arranged to generate a further key block, without transaction data, and comprising data corresponding to the proofs. The miner node may be arranged to transmit the further key block to the plurality nodes, and at least a portion of the witness nodes may be arranged to validate the further key block; and further to transmit proofs corresponding to the validation of the further key block to one or more miner nodes. The miner node may be further arranged to: execute a consensus operation on validation results received from the portion of the witness nodes; and to determine if the further key block is valid based upon the outcome of the consensus operation.

The miner node may be arranged to seal the key block by appending the witnessed further key block to the blockchain. The proofs corresponding to the testimonies may be included in the key block included as a seal only if quorum is achieved under the consensus operation.

The witness nodes may be deterministically identified as qualified to witness the key block.

The witness nodes may be arranged to validate the key by determining that the key block succeeds a current top block of the blockchain. The top block of the blockchain may be a block corresponding to a block determined be the top block at the miner node.

The key block may comprise data corresponding to an indication of the node allowed to generate the next transaction block.

According to a third aspect of the present disclosure there is provided a processor arranged to operate as the miner node of the second aspect of the present disclosure.

According to a fourth aspect of the present invention there is provided a processor arranged to operate as one of the plurality of witness nodes of the second aspect of the present disclosure.

According to a fifth aspect of the present disclosure there is provided a non-transitory computer readable medium storing instructions which, when executed on a processor, cause the processor to execute steps (i), (ii), (v) and (vi) of the first aspect of the present disclosure.

The instructions when executed by the processor may cause the processor to append the validated key block to the blockchain following a current top block of the blockchain.

The instructions when executed by the processor may cause the processor to generate a further key block, without transaction data, and comprising data corresponding to the proofs at a, or the, miner node. The instructions when executed by the processor may cause the processor to seal the key block by appending further key block to the blockchain following witnessing of the further key block.

The instructions when executed by the processor may cause the processor to determine that a top block of the blockchain comprises a block corresponding to a block determined be the top block at a, or the, miner node.

The key block may comprise data corresponding to an indication of the node allowed to generate the next transaction block.

According to a sixth aspect of the present disclosure there is provided a non-transitory computer readable medium storing instructions which, when executed on a processor, cause the processor to execute steps (iii) and (iv) of the first aspect of the present disclosure.

The instructions when executed by the processor may cause the processor to validate the key block by a witness node.

The witness node may be one of a plurality of witness nodes which may be deterministically identified as qualified to witness the key block.

The instructions when executed by the processor may cause the processor to validate the key block by determining that the key block succeeds a current top block of the blockchain.

The key block may comprise data corresponding to an indication of the node allowed to generate the next transaction block.

### BRIEF DESCRPTION OF THE DRAWINGS

The disclosure will now be described, by way of example only, with reference to the accompanying drawings in which:
Figure 1 is a schematic representation of a distributed blockchain witnessing computing system according an aspect of the present disclosure comprising a miner node and witness nodes according to further aspects of the present disclosure;
Figure 2 is a schematic representation of a blockchain witnessed in accordance with an aspect of the present disclosure;
Figure 3a-c are a schematic representations of the computing system of Figure 1; and
Figure 4 is a flowchart detailing a method of blockchain witnessing in accordance with an aspect of the present invention, including optional steps.

### DETAILED DESCRIPTION OF EMBODIMENTS OF THE PRESENT DISCLOSURE

A number of blockchains have introduced validation schemes, where a block reaches 'finality' as soon as it has been approved by a sufficient number of witnesses and a quorum is reached. In some cases, for example, Algorand, validators take turns producing the blocks that the others in the validator pool approve. Some blockchains promise finality within a few seconds, with is far quicker than the typical detection time for a network split. This means that blocks may be flagged as 'final' on competing forks on separate sides of a network split. Resolving such a situation may well require revoking the 'final' status of a block, indicating that the finalization decision was premature. The present invention aims to add a seal of finality only when a quorum of globally authorized witnesses agrees. This ameliorates the risk of false positives. As the witnessing process is transparent to all nodes, the possibility of failing to reach quorum due, perhaps, to a network split, is readily observable, and might even serve as an early warning sign that the network status should be probed for ongoing failures.

As noted above there exist blockchains that employ validation schemes for finality, they validate 'regular' blocks containing transactions. In some cases, the witnesses take turns producing blocks. This introduces potential collusion risks and it is uncertain how such validation schemes perform during network splits, for example, in the case of Algorand, block production simply stops until the network split is healed. This limits blockchain availability.

Blockchains exist, for example, Aeternity, that use protocols with content-free structural blocks, but these do not support dynamic validation. Aeternity uses a static finality construct, where forks are disallowed beneath a pre-configured blockchain depth, for example one hundred generations between forks. With this approach, the depth must be great enough to make 'false positives' highly unlikely, as nodes that accidentally fork beyond the limit can only rejoin the network after some sort of reset or rollback.

Thus, the present disclosure aims to provide dynamic blockchain witnessing and validation which does not require a preset chain depth to deal with forking issues and/or provides increased availability of the blockchain over prior solutions.

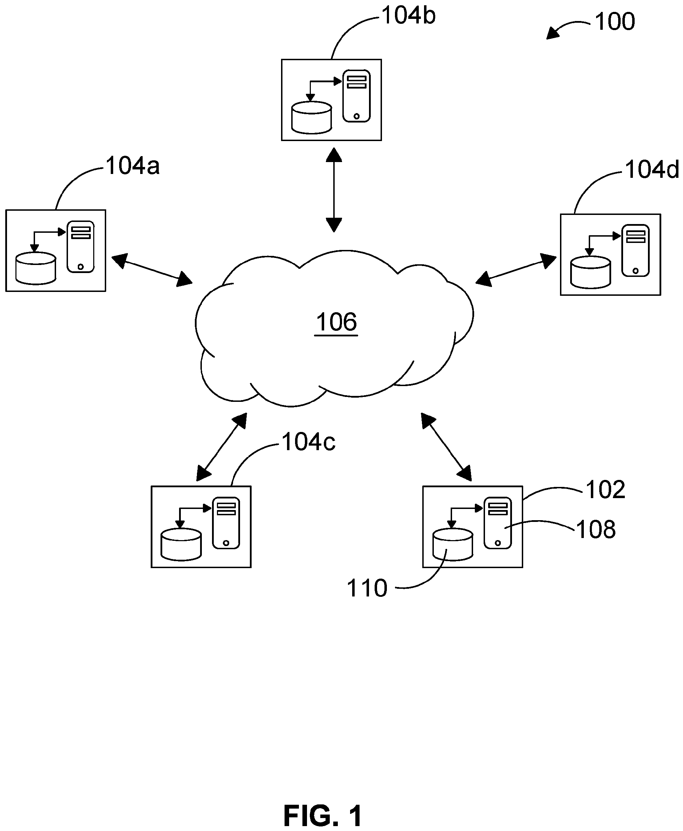

Referring now to Figure 1, in an exemplary embodiment a distributed computing system 100 comprises a miner node 102, a plurality of witness nodes 104a-c, a non-witness node 104d and a network 106 arranged to operatively connect the miner node 102 and the plurality of witness nodes 104a-c and the non-witness node 104d. In the present embodiment each of the miner node 102 and the plurality of witness nodes 104a-d comprises a processor 108 and a data storage device 110. The nodes 102, 104a-d are replicated, shared, and synchronized stores of data which is typically validated via a consensus algorithm to provide a trusted repository of data records that are typically considered to be immutable.

The data storage devices 110 comprise instructions which when executes on a respective processor 108 cause the processor 108 to act as a miner node 102 and/or a witness node 104 as appropriate.

It will be appreciated that although described with reference to discrete computing devices the present disclosure may be implemented by means of a plurality of processors in communication via bus, or via a series of virtual machines operating on one or more processors, or even via separately executing threads on a processor.

It will be further appreciated that although described with reference to single miner node 102 the present disclosure encompasses distributed networks in which there are a plurality of miner nodes and operations described as being executed at a particular miner node may be executed at any one of the plurality of miner nodes, subject to system and protocol constraints. It will be further appreciated that, the term "miner" is used not just for block producers on a Proof of Work blockchain (i.e. actually 'mining'), but also for any block producing node validated under the rules of a particular chain.

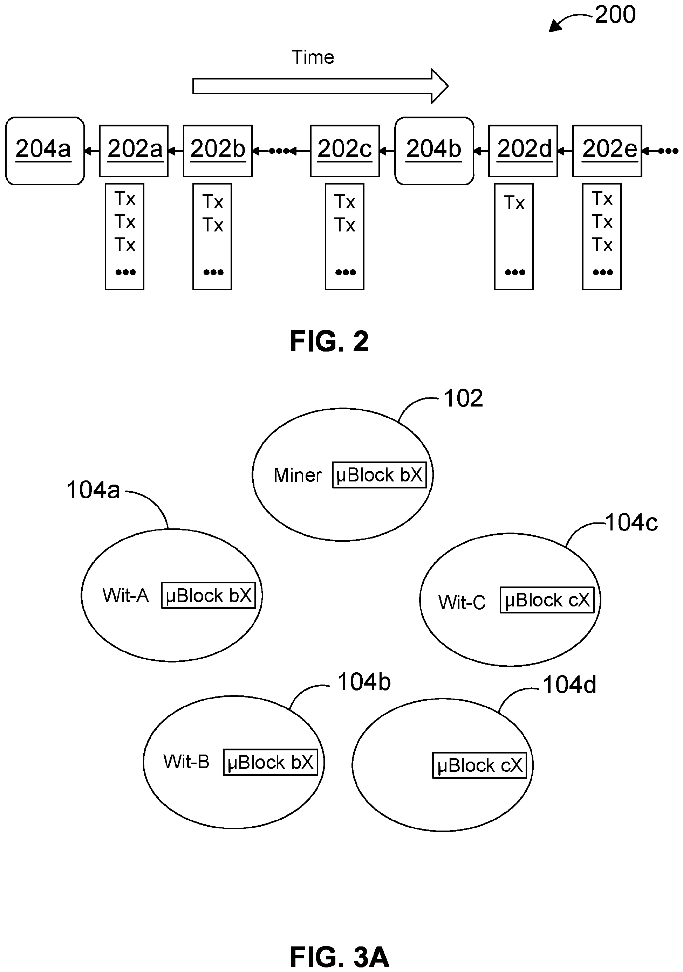

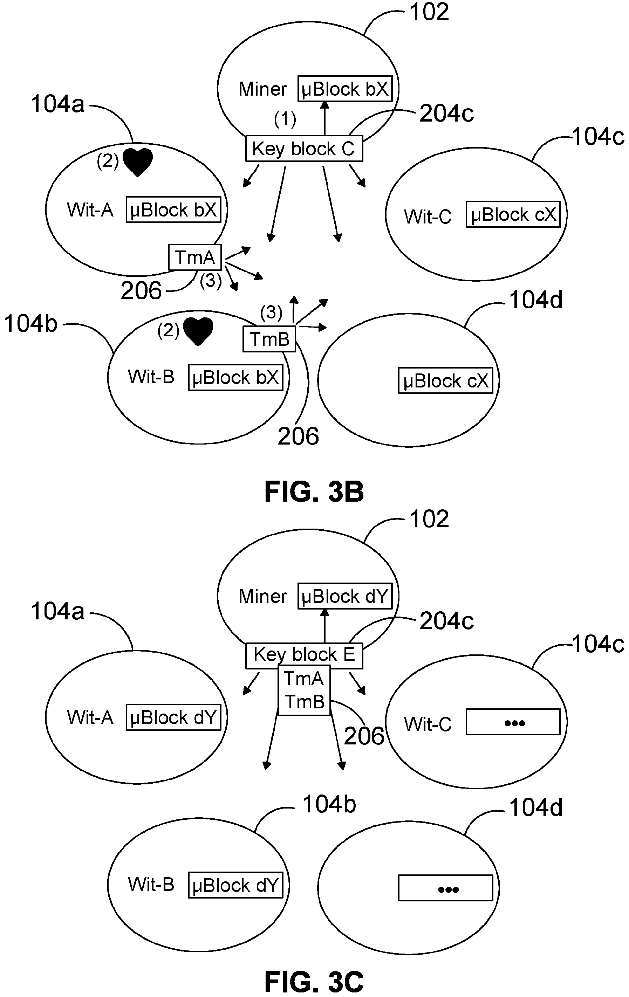

Referring now to Figures 2 and 3a-c, a blockchain 200 comprises a plurality of transaction blocks 202a-e interleaved with key blocks 204a,b. The transaction blocks can be referred to as micro blocks. Each the transaction blocks 202a-e comprises transactional data relating to, by way of non-limiting example, cryptocurrency transactions and/or transactions concerning other digital assets such as non-fungible tokens, NFTs. The key blocks 204a,b do not comprise transactional data but may comprise data related to the structural validation of the blockchain 200 and details of possible miner nodes and may comprise details of which node(s) 102, 104a-d are authorised to generate the next transaction block. As the purpose of the key blocks 204a,b is not to validate the contents of the transaction blocks 202a-e but rather to provide blocks for the structural validation of the blockchain 200 it is not necessary to validate after each transaction block 202a-e and the periodicity of interleaving of the transaction blocks 202a-e and the key blocks 204a,b can vary from per transaction block 202a-e up to a predetermined depth of the blockchain 200 dependent upon the latency requirements of the blockchain 200.

Typically, each block (202a-e, 204a,b) blocks have a header and a body, the cryptographic hash of the header part is typically used as the Block ID.

Non-limiting examples of elements in the header comprise any one or combination of the following: the Block ID of the preceding block, a cryptographic hash of the set of transactions (if the block contains transaction), a cryptographic hash of the set of testimonies (if the block contains testimonies), and/or proof of miner identity might be required (if permission to mine blocks is based upon a whitelist of allowed miner nodes).

From all of the available nodes 104a-d, including miner nodes, a pool witness nodes 104a-c are deterministically identified as a qualified witness and all nodes 102, 104a-d have the same list of witness nodes 104a-c. It will be appreciated that a witness node is a blockchain node that takes part in quorum voting but requires minimum resources for deployment. It will be further appreciated that in a non-limiting example a, or the, miner node 102 may be prevented from witnessing a block generated by itself.

By way of non-limiting example, a qualified witness node 102a-c may be required to have a certain base height of the blockchain 200 associated with it, for example a witness node 104a-c may have had to processed a block up to a certain position in the blockchain 200, wherein the block height required may be past the previously generated key block 204a, or in the case of the first key block 204a, the required height may be one or any integer thereafter. It will be appreciated that each witness node 104a-c will typically operate as a node of the blockchain 200.

Each witness node 104a-c has a view of the blockchain 200 and which block of the chain that it considers to be the topmost block. Similarly, the miner node 102 has a view of the blockchain 200 and considers transaction block bX to be the topmost block of the blockchain 200. Miner node 102 mines a new key block 204c which contains an indication that block bX is the top block of the blockchain 200.

It will be appreciated that, a particular miner node may produce a key block, and then not create any transaction carrying blocks before the next key block is produced. In this case, the current top would be a key block, i.e. not a transaction carrying block, but still a valid top block of the blockchain 200.

Miner node 102 then broadcasts the new key block 204c to the other nodes 104a-d of the system 100. The new key block 204c then succeeds block bX on the blockchain 200. In a non-limiting example, the miner node 102 broadcasts blocks to the nodes 104a-d, and/or to other miner nodes, using a gossip protocol, and it will be appreciated that each node need only to be connected to a respective subset of nodes of distributed computing system 100. In a non-limiting example, the gossip protocol allows the distribution of blocks either directly to a node connected to the miner node 102 or indirectly via passage of a mined block via intermediary nodes.

Upon receiving the new key block 204c witness node A 104a and witness node B 104b both recognise that it succeeds the top block of the blockchain that they are aware of, block bX, and that the key block 204c is structurally valid and generate testimonies 206 confirming their determination that the new key block 204c is valid. In a non-limiting example, metadata in a block header, typically comprising the cryptographic hash (block ID) of the preceding block, is validated according to whatever rules are set out for the blockchain. For example, if the block contains data, such as testimonies or transactions, a set of cryptographic hashes is created for each data element, then produces a cryptographic hash of the set. This hash value is entered in the block header, and is validated by each recipient. The whole header is then hashed to produce the Block ID (which gets included in the following block header, etc.). This ensures that no single data element contained within the block can be altered after the fact. of course. A "proof of authority" to produce the block in the first place will be included: e.g. a Proof of Work, or proof that the producer was otherwise elected through whichever algorithm is used (proof of stake, Byzantine fault tolerance, whitelisted round-robin, etc.) Typically, validation is carried out by the validator of a block verifying the cryptographic hashes by performing the same operations on the data in question as was used to create the cryptographic hashes and if the operations yield a different hash value than the one given in the block header, the block must be rejected.

The testimonies 206 are generated contemporaneously with the processing of the new key block 204c such that it occurs, by way of non-limiting example prior to or coincidentally with the production of the next transaction block following the new key block 204c.

Witness node C 104c does not generate a testimony as it records the top block of the blockchain as being block cX.

The testimonies 206 are broadcast via the network 106 to all nodes 102, 104a-d of the system 100 upon their production. The miner node 102 collects the testimonies 206 and executes a consensus protocol, by way of non-limiting example Byzantine fault tolerance, on the testimonies 206. In the present example, if the consensus threshold is two thirds of all possible votes, the testimonies 206 of witness nodes A and B 104a,b would satisfy the consensus requirement and the new key block 204c is considered valid. It will be appreciated that the quorum requirements can be varied upon the application requirements. As a generality, a consensus protocol specifies which elements are expected in a block, and how they are to be validated.

If a quorum of consensus is not achieved the blockchain 200 progresses according to standard fork difficulty rules such as, by way of non-limiting example, the fork is resolved when subsequent blocks are added and one of the chains becomes longer than the alternative and the network abandons the blocks that are not in the longest chain, leaving them as orphaned blocks.

When a consensus is reached in respect of new key block 204c and after a number of further transaction blocks have been generated a further key block 204d is mined by the miner node 102, identifying transaction block dY as the top block following the increase in block height associated with the further transaction blocks. The further key block 204d contains not only an indication that transaction block dY is considered the top block of the blockchain 200 but also includes the testimonies 206, and/or proof of the testimonies 206. By way of non-limiting example, the testimonies 206 and/or proof of testimonies can be included in the key block 204d in the form of a list of cryptographically signed testimonies 206, which are subjected to validation of format (of course) and signature validation, ensuring that each element is a valid testimony of the relevant block, given by an authorized witness, only once (i.e. no duplicate testimonies). This list of testimonies 206 is hashed, and the resulting cryptographic hash is included in the block header, ensuring that the list cannot be modified after the fact. It will be appreciated that the testimonies 206/proof of testimonies are included in the block 204d as a seal only if a quorum is reached under the consensus operation.

The further key block 204d is added to the blockchain 200 and seals the preceding new key block 204c. The sealing of the new key block 204c confirms its immutability and removes the possibility of its eviction from the blockchain 200 and the prior generation achieves finality. A block sealed and marked as 'final' cannot be evicted from the blockchain 200.

In an alternative embodiment the validation of a key block 204a-d may not be dependent upon the top block of the blockchain 200 but may be based upon a transaction block further down within a generation of the blockchain 200 where a generation describes those transaction blocks between the previous key block and the key block being validated.

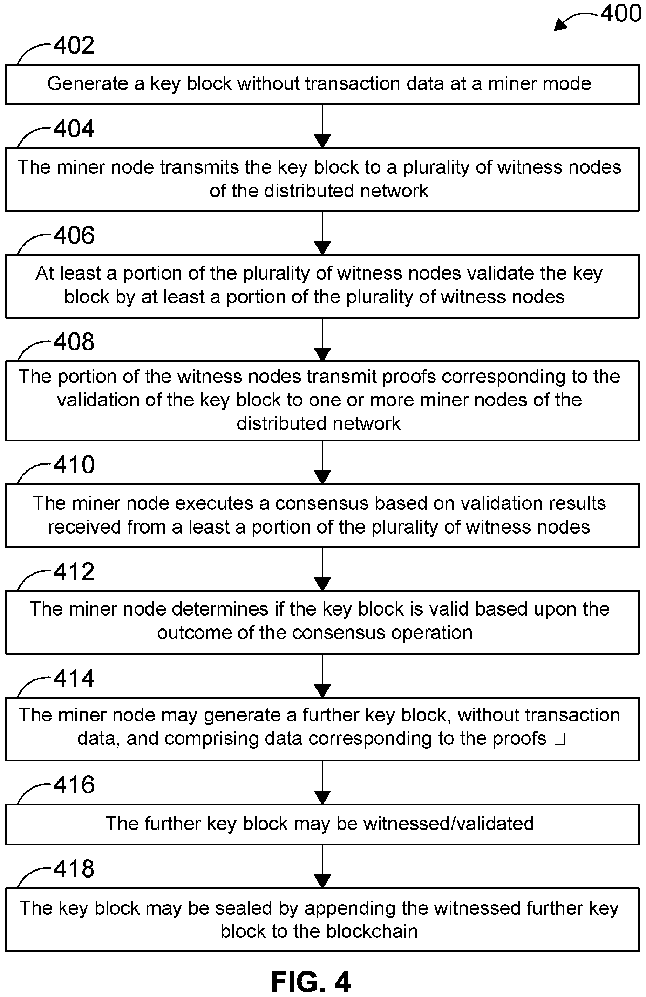

Referring now to Figure 4, a computer implemented method of blockchain witnessing (400) comprises generating a key block without transaction data at a miner node (Step 402). The miner node transmits the key block to a plurality of witness nodes of the distributed network (Step 404). At least a portion of the plurality of witness nodes validate the key block by at least a portion of the plurality of witness nodes (Step 406). The portion of the witness nodes transmit proofs corresponding to the validation of the key block to one or more miner nodes of the distributed network (Step 408). The miner node executes a consensus based on validation results received from the at least a portion of the plurality of witness nodes (Step 410). The miner node determines if the key block is valid based upon the outcome of the consensus operation (Step 412). The miner node may generate a further key block, without transaction data, and comprising data corresponding to the proofs (Step 414) The further key block may be witnessed/validated (Step 416). The key block may be sealed by appending the witnessed further key block to the blockchain (Step 418).

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. The computer readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer readable storage medium having the computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more, or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A computer implemented method of blockchain (200) witnessing comprising the steps of:
i) generating a key block (204c) without transaction data at a miner node (102);
ii) transmitting the key block to a plurality of nodes (104a-d) comprising at least some witness nodes (104a-c);
iii) validating the key block (204c) by at least a portion of the witness nodes (104a,b);
iv) transmitting proofs (206) corresponding to the validation of the key block (204c) to a, or the, miner node (102) from the portion of the witness nodes (104a,b);
v) executing a consensus operation at at least one of the one or more miner nodes (102) based on validation results received from the portion of the witness nodes (104a,b); and
vi) determining if the key block (204c) is valid based upon the outcome of the consensus operation.

2. The method of Claim 1 comprising appending the validated key block (204c) to the blockchain (200) following a current top block (202e) of the blockchain (200).

3. The method of either Claim 1 or Claim 2 comprising generating a further key block (204d), without transaction data, and comprising data corresponding to the proofs (206) at a, or the, miner node (102).

4. The method of Claim 3 comprising witnessing the further key block (204d) using steps ii) to vi) of the method.

5. The method of Claim 4 comprising sealing the key block (204c) by appending the witnessed further key block (204d) to the blockchain (200).

6. The method of any preceding claim, wherein validating the key block (204c) comprises determining that the key block (204c) succeeds a current top block (202e) of the blockchain (200).

7. A blockchain (200) witnessing system (100) comprising:
a miner node (102); and
a plurality of nodes (104a-d) comprising at least some witness nodes (104a-c); wherein
the miner node (102) is arranged:
to generate a key block (204c) without transaction data; and
transmit the key block (204c) to the nodes (104a-d);
at least a portion of the witness nodes (104a,b) are arranged to:
validate the key block (204c); and
transmit proofs (206) corresponding to the validation of the key block (204c) to the miner node (102); and
wherein the miner node (102) is further arranged to:
execute a consensus operation based on validation results received from the at least a portion of the plurality of witness nodes (104a,b); and
determine if the key block (204c) is valid based upon the outcome of the consensus operation.

8. The system of Claim 7, wherein the miner node (102) is arranged to append the validated key block (204c) to the blockchain (200) following a current top block (202e) of the blockchain.

9. The system of either Claim 7 or Claim 8, wherein the miner node (102) is arranged to generate a further key block (204d), without transaction data, and comprising data corresponding to the proofs (206).

10. The system of Claim 9, wherein the miner node (102) is arranged to transmit the further key block (204d) to the plurality nodes (104a-d), and at least a portion of the witness nodes (104a,b) are arranged to validate the further key block (20-4a-d) (104a,b); and further to transmit proofs (206) corresponding to the validation of the further key block (204d) to the at least one miner node (102) from the portion of the plurality of witness nodes (104a,b).

11. The system of Claim 10, wherein the miner node (102) is arranged to: execute a consensus operation based on validation results received from the portion of the plurality of witness nodes (104a,b); and to determine if the further key block (204d) is valid based upon the outcome of the consensus operation.

12. The system of Claim 11, wherein the miner node is arranged to seal the key block (204c) by appending the witnessed further key block (204d) to the blockchain (200).

13. The system of any one of Claims 7 to 12, wherein the witness nodes (104a-c) are arranged to validate the key block (204c) by determining that the key block (204c) succeeds a current top block (202e) of the blockchain (200).

14. A processor (108) arranged to operate as a miner node (102) of any one of Claims 7 to 13.

15. A processor (108) arranged to operate as a witness nodes (104a-c) of any one of Claims 7 to 13.
